# EUROPEAN PATENT SPECIFICATION

(11) **EP 0 816 122 B1**
(45) Date of publication and mention of the grant of the patent: **13.03.2002**
(21) Application number: 97108801.8
(22) Date of filing: 02.06.1997
(51) Int. Cl.: B44C 1/17, B44C 5/04, B29C 59/00

(54) **Transfer decorated members and the method of manufacturing the same**
Gegenstände dekoriert unter Verwendung einer Übertragungsfolie und Verfahren zu deren Herstellung
Objets décorés utilisant une feuille de transfert et procédé pour les fabriquer

(30) Priority: 27.06.1996 JP 16749396; 26.07.1996 JP 19755996
(43) Date of publication of application: 07.01.1998
(73) Proprietor: Toppan Printing Co., Ltd., Taito-ku, Tokyo 110-0016 (JP)
(72) Inventor: Misumi, Hiroaki, Taito-ku, Tokyo (JP); Namba, Keijirou, Taito-ku, Tokyo (JP); Ishii, Yuji, Taito-ku, Tokyo (JP)
(74) Representative: Pellmann, Hans-Bernd, Dipl.-Ing.

(56) References cited:
- EP-A- 0 625 433
- WO-A-92/21514
- WO-A-94/16901
- GB-A- 2 289 439
- US-A- 5 091 031
- US-A- 5 324 378

## Description

The present invention relates to transfer decorated members and a method of manufacturing the same, and more specifically to transfer decorated members used for various building components such as fittings, furniture, housings of various devices, etc. and methods of manufacturing the same.

For example, large-sized flat members, for example, door members such as room doors, kitchen doors and doors of built-in storage units, wall members and side members of built-in furniture, have so-called framed panel structures in order to keep high strength, reduce weight and achieve good designs (beauty). In the framed panel structure, frame members such as stiles and rails are assembled to form a frame, and panels are set in said frame.

Conventionally, large-sized natural wood members having beautiful grain designs have been used as such frame members and panels. However, the cost of large-sized natural wood members is rising more and more due to the shortage in supply. Consequently, decorated members, which have designs similar to those of natural wood members and are available at lower costs, is principally used as large-sized flat members.

The decorated members are manufactured using decorated frame members and panels which are made of ligneous substrates such as plywoods, laminated lumbers, particle boards or medium density fiber boards (MDF) and which are separately decorated by appropriate methods such as the following:
1) laminating decorative sheets with printed decorative patterns such as wood grain patterns;
2) transferring decorative patterns by using transfer sheets having decorative pattern transfer layers; or
3) transferring decorative patterns by means of direct printing method, etc.

The above-mentioned method, i.e., the separate decorating method, is advantageous in that various kinds of decorated members can easily be obtained in a small amount for each kind, by using decorative sheets or transfer sheets with a relatively small kinds of decorative patterns. Specifically, the following methods can be preferably used to produce various kinds of decorated members in a small amount for each kind: 1) varying the combinations of decorative patterns of frame members and those of panels, 2) varying the shapes of the frame members and panels, and 3) varying the angles of decorative patterns on decorative sheets or transfer sheets and combining them.

The decorated members are manufactured by combining the frame members and panels which have been decorated separately, and thus the beauty of the framed panel structure is obtained.

These decorated members, however, are assembled after the substrates of the frame members and panels are individually formed and decorated. As a result, the manufacturing process is very complicated. Because of the complicacy of the process, the process control is difficult and the productivity is low. It is thus difficult to reduce the manufacturing cost.

To solve this problem, there is proposed the overall decorating method wherein a single decorative sheet or transfer sheet on which a decorative pattern of a framed panel structure is printed in advance is laminated or transferred on a flat-shaped substrate, thereby providing the decorative pattern of framed panel structure.

The overall decorating method is classified into two methods: a flat plate method in which a decorative pattern of a framed panel structure is provided onto a substrate with a flat surface; and a three-dimensional method in which a decorative pattern of a framed panel structure is provided onto a substrate with a three-dimensional surface shape similar to the surface shape of a real framed panel structure.

The three-dimensional method is an overall decorating method in which a thermoformable decorative sheet or transfer sheet is laminated or transferred on a substrate having a three-dimensional surface shape by means of a vacuum forming process, thereby providing a decorative pattern.

A three-dimensional overall decorating method using a laminated decorative sheet is described in e.g. GB-A-2 289 439.

The three-dimensional method has an advantage in that not only a decorative pattern of a framed panel structure is obtained, but also a three-dimensional design similar to the structure of the real framed panel is obtained.

In the overall decorating method, however, a large-sized decorative sheet or transfer sheet is inevitably required when a large-sized decorated member is to be manufactured. Specifically, the overall decorating method requires a large-scale printing machine for the preparation of a large-sized decorative sheet or transfer sheet. Thus, the size of the decorated members is limited by the effective printing area of the printing machine used to print the decorative sheet/transfer sheet.

In the overall decorating method, the decorative sheet or transfer sheet with the decorative pattern of framed panel structure needs to be printed and produced. Thus, unlike the above-described separate decorating method, it is very difficult to manufacture various kinds of decorated members in a small amount for each kind.

In addition, the thermoformable decorative sheet or transfer sheet may deform due to the tension or the heat of the dryer in the printing process, resulting in the distortion of the decorative pattern of framed panel structure. Consequently, mismatching occurs between the decorative pattern and the shape of the substrate, and the design of the decorated members is degraded. The problem of distortion of decorative pattern can be solved by the use of a heat-resistant film which is resistant to thermal deformation. However, using the heat-resistant film, lamination or transfer by means of vacuum forming process is impossible. Thus, the heat-resistant film cannot be used to provide a decorative pattern onto the substrate having a surface with a three-dimensional shape.

In summary, the separate decorating method has the problems in that the process control is difficult and the productivity of decorated members is low due to the complicated manufacturing process, and the manufacturing cost cannot be reduced.

Although the overall decorating method is advantageous in solving the problems of the separate decorating method, the size of the decorated members is limited and the manufacture of *various kinds* of decorated members in a small amount for each kind is difficult. Moreover, it is difficult to provide a decorative pattern onto the substrate so as to match with the three-dimensional surface shape of the substrate.

Finally, WO 94/16 901 describes a method for transferring a colour image by transfer printing onto a keyboard.

An object of the present invention is to provide transfer decorated members and a method of manufacturing the same, wherein the transfer decorated members have an excellent design consisting of a combination of plural different patterns, like a framed panel structure, and the transfer decorated members can easily be manufactured with high productivity.

Specifically, the present invention aims at providing transfer decorated members and a method of manufacturing the same, wherein the size of the decorated members is not limited by the effective area of the printing machine, various kinds of decorated members can easily be manufactured in a small amount for each kind, and the decorative pattern can easily be provided on the substrate with a three-dimensional surface shape in correspondence with it.

Another goal of the present invention is to provide transfer decorated members and a method of manufacturing the same, wherein the process controllability and the productivity of products can be improved by simplified manufacturing process, and accordingly the manufacturing cost can be reduced.

This object is achieved with a method having the features of claim 1.

The above-mentioned object, other objects, features and advantages of the present invention will be made clearer by the following detailed description and the accompanying drawings. In the drawings, equivalent structural elements are denoted by like reference numerals.

This invention can be more fully understood from the following detailed description when taken in conjunction with the accompanying drawings, in which:
FIG. 1 is a plan view showing the structure of the transfer decorated member according to an explanatory example;
FIG. 2 is a cross-sectional view taken along line II-II in FIG. 1;
FIGS. 3A to 3E are cross-sectional views illustrating the process of manufacturing the transfer decorated members according to the explanatory example;
FIG. 4 is a pictorial view showing the structure of the transfer decorated member according to an embodiment of the present invention;
FIG. 5A is a cross-sectional view taken along line VA-VA in FIG. 4;
FIG. 5B is a cross-sectional view taken along line VB-VB in FIG. 4; and
FIG. 6 to FIGS. 8A and 8B are pictorial views illustrating the process of manufacturing the transfer decorated members according to the embodiment.

An Embodiment of the present invention will now be described with reference to the accompanying drawings.

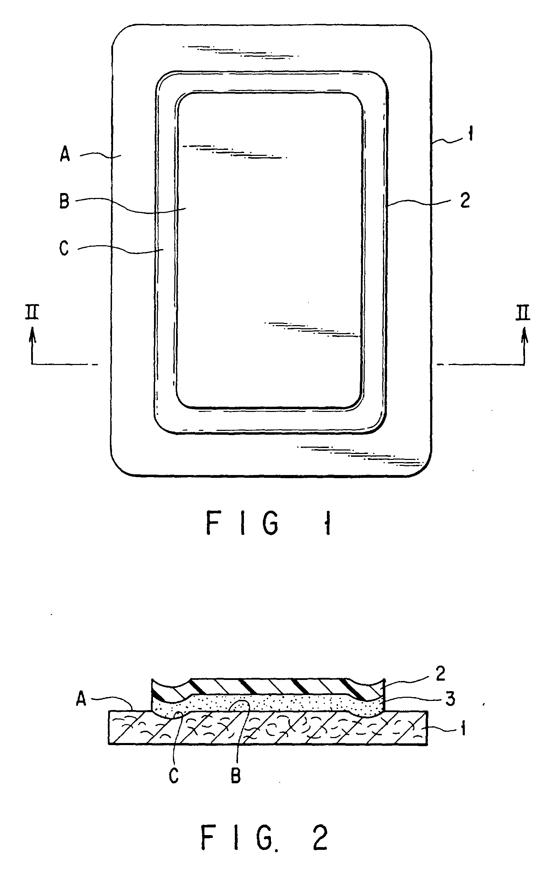

FIG. 1 is a plan view showing the structure of the transfer decorated member according to the explanatory example, and FIG. 2 is a cross-sectional view taken along line II-II in FIG. 1. The transfer decorated member includes a substrate 1 of a medium density fiberboard (MDF) molded to have a peripheral frame-like region A, a panel-like region B situated inside the frame-like region A, and a groove-like concave region C defined between the frame-like region A and the panel-like region B. A transfer layer 2 having a wood grain pattern is formed on the panel-like region B and concave region C of substrate 1 by means of transfer process, with an adhesive 3 interposed. Since the frame-like region A is exposed, the surface design of the substrate 1 is viewed as a pictorial pattern there.

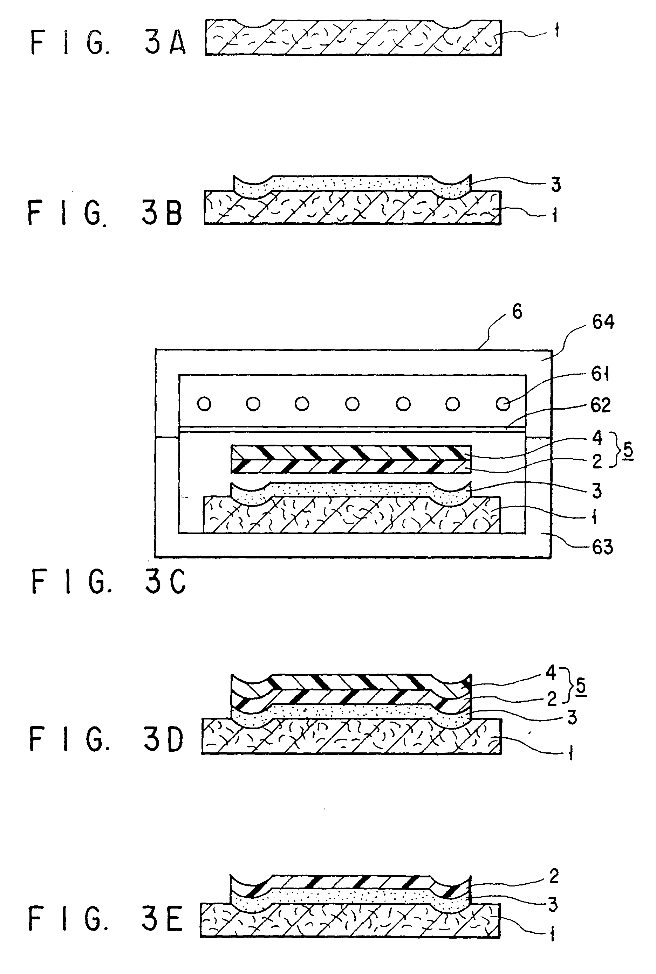

FIGS. 3A to 3E are cross-sectional views illustrating the process of manufacturing the transfer decorated members. As is shown in FIGS. 3A and 3B, the adhesive 3 is coated on the panel-like region B and concave region C (corresponding to the transfer pattern formation region in this example) of the substrate 1 selectively by means of spraying, etc. On the other hand, a thermoformable transfer sheet 5 consisting of a thermoformable sheet 4 and a separable transfer layer 2 formed on the releasing surface of the thermoformable sheet 4 is cut in a plan shape corresponding to the transfer pattern formation region and placed on the adhesive 3 of substrate 1.

After the transfer sheet 5 is placed on the adhesive 3, the substrate 1 is situated within a vacuum forming machine 6, as shown in FIG. 3C.

In the vacuum forming machine 6, the housing 63, 64 is closed and the transfer sheet 5 is heated and softened by the heat of a heat source 61 such as an electric heater. Then, the pressure within the lower housing 63 partitioned in the housing by a silicone rubber film 62 is reduced, while compressed air is introduced into the upper housing 64.

Because of the pressure difference between the pressure in the upper housing 64 and that in the lower housing 63 of the vacuum forming machine 6, the transfer sheet 5 is deformed by means of the silicone rubber 62 and put in close contact with the three-dimensional surface of the substrate 1 with the adhesive 3 interposed therebetween. Thus, as shown in FIG. 3D, the transfer layer 2 is put in close contact with the surface of substrate 1, with the adhesive 3 interposed.

Then, in the vacuum forming machine 6, the application of vacuum pressure is stopped, and the substrate 1 is taken out of the housing. Thus, the vacuum forming process is completed.

After the vacuum forming process, the thermoformable sheet 4 is removed from the transfer layer 2. Thus, as shown in FIG. 3E, the laminated structure of the transfer decorated member, wherein the transfer layer 2 is put in close contact with the transfer pattern formation region of the substrate 1, is completed.

The substrate 1 may be formed of, for example, a ligneous material such as plywood, laminated lumber, a particle board or an MDF, an inorganic material such as a plasterboard, a molded product of a resin or a metal, or a lamination or composite thereof, or any of the other conventional materials.

In the transfer sheet 5, the transfer layer 2 with a desired decorative pattern is separably provided on the releasing surface of the thermoformable sheet 4.

The thermoformable sheet 4 may be formed of, for example, a thermoformable synthetic resin such as polyvinyl chloride, polystyrene or polypropylene, or a lamination thereof, etc. As in the prior art, the surface of the thermoformable sheet 4, on which the transfer layer 2 is to be provided, may be provided with a releasing layer, a gloss control layer, etc.

The transfer layer 2 may be formed of, for example, a conventionally known printing ink or coating agent, in which a coloring agent of an organic or inorganic dye or pigment is dispersed in an appropriate binding agent. It is desirable, however, that the transfer layer 2 have thermoformability such that the transfer layer 2 is deformed along with the thermoformable sheet 4 in accordance with the three-dimensional surface of the substrate 1 in the vacuum forming process.

The binding agent in the transfer layer 2 may be preferably formed of, for example, acrylic resin, polyvinyl chloride resin, polyvinyl acetate resin, polyvinyl butyral resin, vinyl chloride-vinyl acetate copolymer resin, ethylene-vinyl acetate copolymer resin, polyamide resin, chlorinated polypropylene resin, urethane resin, nitrocellulose, cellulose acetate, cellulose acetate propionate, chlorinated rubber, cyclized rubber, etc.

The transfer layer 2 can be formed by conventional methods, for example, printing methods such as gravure printing method, offset printing method, screen printing method or flexographic printing method, or coating methods such as a gravure coating method, knife coating method, roll-coating method or spray coating method.

The transfer layer 2 is a layer for decorating the substrate. Thus, the pattern to be formed as the transfer layer 2 is not limited to common wood grain patterns, and may be wooden mosaic patterns, stone grain patterns, metallic patterns, various concrete or abstract patterns, monochromatic plain patterns, or any other arbitrary pattern. The term "pattern" in this context is not limited to commonly accepted senses, and it may refer to monochromatic plain patterns, as mentioned above, and such semitransparent patterns as to make underlayers visible, as described below.

The transfer layer 2 may include a layer other than the pattern layer. For example, it may comprise a lamination of a releasing layer, a surface protective layer, a pattern layer and an adhesive layer which are formed successively on the thermoformable sheet 4.

On the other hand, the adhesive 3 is preferably coated on the substrate 1. Thus, even if the transfer sheet 5 is slightly misplaced, the pattern can be formed only on the transfer pattern formation region. The coating of the adhesive 3 on the substrate 1 is advantageous in that when the transfer sheet 5 has been cut in a size slightly greater than the transfer pattern formation region, even when a slight misplacement of the transfer sheet 5 occurs, a non-pattern area is not formed within the transfer pattern formation region. The adhesive 3 may be coated by conventional methods such as a brushing method, a spraying method and a roll-coating method.

The adhesive 3 may be coated on the surface of the transfer layer 2 of transfer sheet 5, in place of the surface of the substrate 1. However, if the adhesive 3 is coated on the surface of the transfer layer 2, the transfer decorated member may become defective once misplacement of the transfer sheet 5 occurs in the transferring step. Thus, precision in alignment is required.

The adhesive 3 may be a conventional one, for example, vinyl acetate resin emulsion adhesive, acrylic resin emulsion adhesive, urethane adhesive, epoxy adhesive, acrylic adhesive, or cellulose derivative adhesive.

It is preferable that the adhesive 3 has low tackiness in a semi-hardened state or semi-dried state. In this case, when the transfer sheet 5 is placed on the substrate 1, the transfer sheet 5 can be provisionally held and the workability is enhanced.

It is desirable that a solvent component in the adhesive 3 between the transfer layer 2 and substrate 1 be completely dried up and removed. It is difficult in general, however, to completely remove the solvent component in the adhesive 3. As a result, the solvent component in the adhesive 3 is confined between the substrate 1 and the transfer sheet 5 at the time of transfer. At the time of heating in the transfer step, the solvent component is vaporized and expanded. Consequently, the transfer layer 2 transferred on the substrate 1 may be swollen. The swelling phenomenon can be effectively prevented by making many fine through-holes in the transfer sheet 5 in advance and discharging the vaporized residual solvent through the through-holes. Such holes are also advantageous in that the air confined in the concave region C can be discharged when the transfer sheet 5 is placed onto the substrate 1 with a three-dimensional surface, and the transfer sheet 5 can be put in close contact with the inner surface of the concave region C.

The transfer decorated members having the above structure have the following advantageous effects.

In the transfer decorated members, the transfer layer 2 having a decorative pattern is transferred selectively on the transfer pattern formation region which is a part of the surface of the substrate. Thus, unlike the prior art, there is no need to prepare a transfer sheet having an area corresponding to the entire area of the decorated member.

Accordingly, the transfer decorated members can be manufactured easily as with the conventional overall decorating method. In addition, the problem caused by the limited effective printing area of the printing machine is solved. Moreover, the problem of misalignment caused by the distortion of the pattern in the printing process can be eliminated, thus the yield of the products can be enhanced. Even when a distortion occurs in each transfer sheet 5 in the printing step, the transfer sheet 5, before placed on the substrate, is cut in a size slightly greater than the transfer pattern formation region, and the transfer layer 2 is transferred only onto the transfer pattern formation region where the adhesive 3 is selectively coated. Thus, if the degree of distortion is within such a range that the design of the decorative pattern itself is not seriously damaged, no problem will arise.

With the simple manufacturing process, the process controllability and the productivity of products can be improved and thus the manufacturing cost is reduced.

Besides, the transfer decorated members can be provided with a good design by the combination of the region without transfer layer, which shows the surface design of the substrate itself, and the transfer decorative pattern formation region, which shows the decorative pattern of the transfer layer.

In this transfer decorated member, the transfer layer can be put in contact with the substrate 1 with a three-dimensional surface and transferred thereon by the vacuum forming process using the thermoformable transfer sheet. Specifically, according to this manufacturing method, a pattern can be transferred even on the concave region of the substrate in good condition with no transfer defect. For example, as in the present example, at least a part of the boundary of the transfer layer is provided in correspondence with the three-dimensional surface shape of the substrate. Thereby, a transfer decorated member having an excellent design matching with the three-dimensional surface of the substrate, like the design of a framed panel structure, can easily be manufactured.

### (Embodiment)

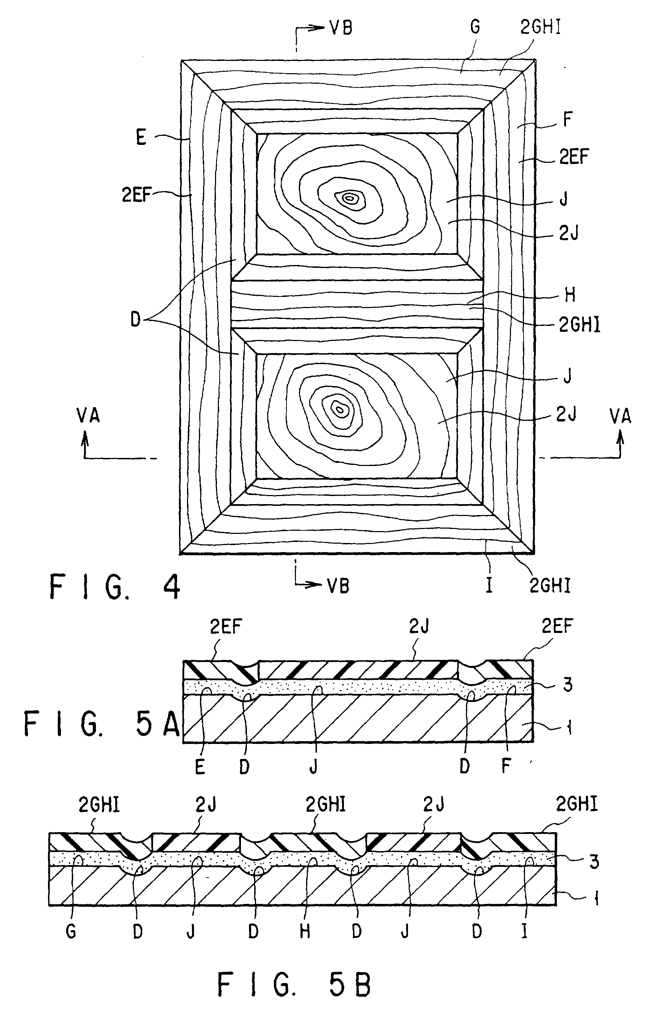

A transfer decorated member according to the embodiment of the present invention will now be described. FIG. 4 is a pictorial view showing the structure of the transfer decorated member according to the embodiment. FIG. 5A is a cross-sectional view taken along line VA-VA in FIG. 4, and FIG. 5B is a cross-sectional view taken along line VB-VB in FIG. 4. The structural parts common to those in FIGS. 1 and 2 are denoted by like reference numerals, and the detailed description thereof will be omitted in the description below. Only different parts will be described.

The transfer decorated member according to the embodiment is a modification of the explanatory example and takes advantages of both the conventional separate decorating method and overall decorating method. Specifically, as shown in FIG. 4, seven transfer layers 2_{EF}, 2_{GHI} and 2_{J} are individually bonded on a single substrate 1 by means of an adhesive 3.

As is shown in FIG. 4, the transfer decorated member has a pattern of a framed panel structure for a door. The substrate 1 is a laminated lumber with a longitudinal grain. Two rectangular frame-like concave regions D are arranged longitudinally. The concave regions D define the surface of the substrate 1 in an 8-shaped pattern comprising stile-like regions E and F, rail-like regions G, H and I, and panel-like regions J.

The transfer layers 2_{EF} with such a degree of transparency as to make the underlayer visible are bonded to the stile-like regions E and F. Thus, the surface design of the substrate 1 is visible in the stile-like regions E and F. The transfer layers 2_{GHI} with transverse grain patterns are bonded to the rail-like regions G, H and I. The transfer layers 2_{J} with annual-ring patterns are bonded to the panel-like regions J.

The transfer layers 2_{GHI} of the rail-like regions G to I are continuously bonded to those of the concave regions D, which adjoin the rail-like regions G to I. Similarly, the transfer layers 2_{EF} of the stile-like regions E and F are continuously bonded to those of the concave regions D, which adjoin the stile-like regions E and F.

The transfer decorated member having the above structure has, in addition to the advantageous effects of the explanatory example, the following advantageous effects.

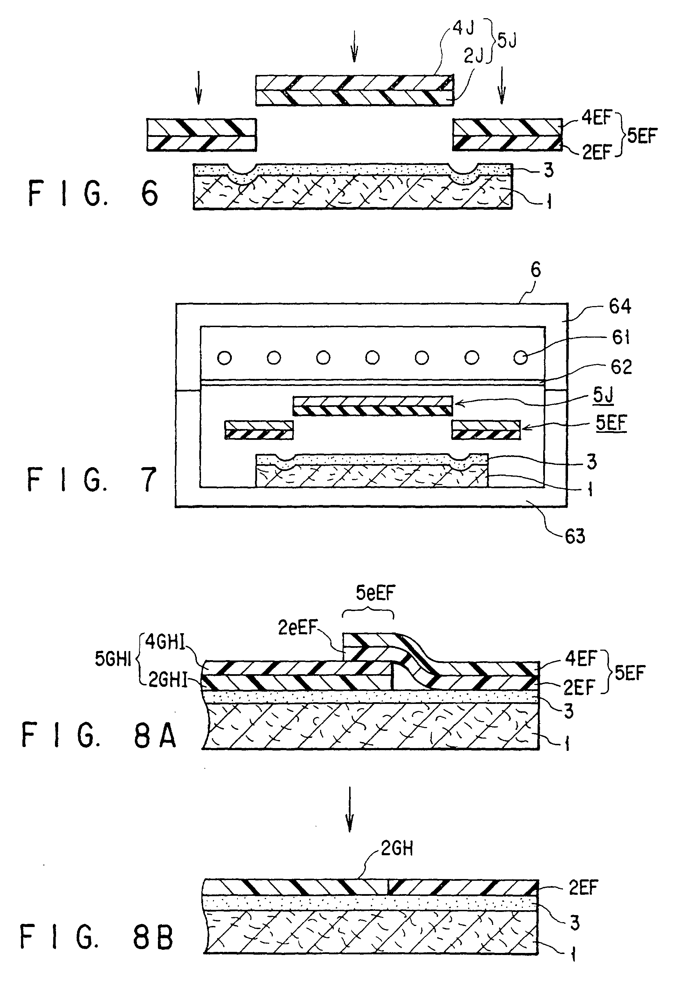

As is shown in FIGS. 6 and 7 (5_{GHI} and 2_{GHI} being not shown), it is desirable that all the transfer sheets 5_{EF}, 5_{GHI} and 5_{J} be placed on the substrate 1 with their transfer layers 2_{EF}, 2_{GHI} and 2_{J} situated downward, and the transfer sheets 5_{EF}, 5_{GHI} and 5_{J} be simultaneously put in close contact with the substrate 1 by vacuum forming process, and transferred thereon. According to this technique, the number of transfer steps is one, and the manufacturing process is simplified. With the simple manufacturing process, the process controllability and the productivity of products can be improved and thus the manufacturing cost is reduced.

According to this manufacturing process, even when the edges of the transfer sheets 5_{GHI} and 5_{EF} are not exactly abutted upon each other and overlap each other, as shown in FIG. 8A, at boundary areas of the transfer pattern formation regions when the transfer sheets 5_{EF}, 5_{GHI} and 5_{J} are placed on the substrate 1, the transfer layer 2e_{EF} of the upper transfer sheet 5e_{EF} does not come in contact with the substrate 1 or the lower transfer layer 2_{GHI}.

The overlapped portion of the upper transfer layer 2e_{EF} is removed along with the lower thermoformable sheet 4_{GHI}, as shown in FIG. 8B, when the lower thermoformable sheet 4_{GHI} is removed. Thus, the transfer layers 2_{GHI} and 2_{EF} are not doubly transferred, and an unbeautiful dense-color area or step in height is not formed. Besides, if the transfer sheets 5_{EF}, 5_{GHI} and 5_{J} are intentionally made to overlap each other, formation of a gap due to non-transfer in boundary areas of the transfer pattern formation regions can be prevented.

As has been described above, the manufacturing method of this invention is more reliable than the decorating method by means of lamination of decorative sheets. In the case of the decorating method by means of lamination of decorative sheets, it is very difficult to exactly cut the decorative sheets in sizes corresponding to large pattern regions, to exactly abut the cut decorative sheets upon each other without gap or overlap, and to adhere them to the substrate. Thus, the decorating method by means of lamination of decorative sheets tends to cause defects of pattern, to degrade the design of the pattern, and to form stepped overlap which may cause the peeling of the decorative sheets. Unlike the present invention, the reliability of this method is low.

According to this embodiment, various kinds of transfer decorated members can be manufactured by preparing a relatively small number of kinds of transfer sheets 5_{EF}, 5_{GHI} and 5_{J} and combining the substrate 1 with the transfer sheets 5_{EF}, 5_{GHI} and 5_{J}. In other words, various kinds of products can be easily manufactured with a small number for each kind.

This embodiment has an advantage in that the size of the manufacturable transfer decorated members is not limited by the effective printing area of the printing machine. This advantage will now be described supplementarily.

In this embodiment, it is not necessary that, for example, the transfer sheets 5_{EF} for decorating the stile-like regions E and F, which are the longest pattern regions, be produced by means of a printing machine having an effective printing area greater than the length of the stile-like regions E, F. The reason is that the transfer sheets 5_{EF} for the longest stile-like regions E and F can be printed by means of a printing machine having an effective printing area shorter than the length of the stile-like regions E, F, for example, by providing the transfer sheets 5_{EF} with endless patterns consisting of a repetition unit shorter than the length of the stile-like regions E, F. This method of obtaining the transfer decorated member having a size greater than the effective printing area of the printing machine by using the transfer sheets with endless patterns can also be applied to the explanatory example.

### (Modification)

The transfer decorated members according to the present invention include a transfer decorated member wherein a transparent or semitransparent protective layer is coated on the surface after the transfer layer 2 has been transferred on the transfer pattern formation region (whole surface in the embodiment). The protective layer provides the surface of the transfer decorated member with surface properties such as wear resistance, water resistance, solvent resistance, contamination resistance or weather resistance.

The protective layer may be formed on only the transfer pattern formation region or on the entire surface including the region without transfer layer.

The coating material forming the protective layer may be any of the conventional coating agents or top-coating agents such as acrylic coating agents, urethane coating agents, polyester coating agents, cellulose derivative coating agents, or fluorocarbon coating agents.

The protection layer may be formed by the use of the transfer sheet 5.

When plural transfer sheets 5 are simultaneously put in close contact with the substrate 1 and transferred thereon, the transfer layer 2 of the transfer sheet 5 superposed on another transfer sheet 5 is not transferred on the surface of the substrate 1. Accordingly, the transfer sheet 5, which is placed last among all the transfer sheets 5, may not necessarily be cut in a size of the corresponding transfer pattern formation region. For example, when a transfer decorated member, wherein the entire surface of the substrate 1 is covered with plural transfer layers 2, is to be manufactured, a transfer sheet 5ₐₗₗ having an area covering the entire substrate 1 can be placed on the base plate 1 and other transfer sheets 5 after the other transfer sheets 5 have been placed on the substrate 1, and then all the transfer sheets 5 can be put in close contact with the substrate 1 and transferred thereon simultaneously.

In the above case, if the ratio of the pattern area covered by the transfer sheet 5ₐₗₗ is large, there is an advantage that a step of cutting the transfer sheet 5ₐₗₗ can be omitted. In addition, in the interval between the step of placing the transfer sheets 5 and the step of closely contacting them onto the substrate 1, removal or positional displacement of the transfer sheets 5 due to a wind or vibration can be prevented.

The transfer decorated members according to the present invention can be manufactured by the vacuum forming method, the vacuum forming method is most suitable since the transfer layer 5 can easily be put in contact with the deep concave or the side face of the substrate 1, which is difficult if adopting a hot pressing method using an elastic body.

Moreover, when plural transfer layers are provided on the substrate 1 in the transfer decorated member of the present invention, the decorative pattern of each transfer layer can be freely chosen with respect to the presence/absence of color, transparency/ semitransparency/opacity, etc. For example, the decorative patterns of the transfer layers may be different from one another or some of them may be the same. Alternatively, the angles of the same patterns of the transfer layers may be varied.

Specifically, the same transfer layers with straight grain pattern as used for the three rail-like regions G, H and I may be transferred on the stile-like regions E and F with their direction of the straight grain pattern set longitudinally. Alternatively, the same transfer sheets 2_{GHI} with straight grain patterns may be substituted for the transfer sheets 2_{J} with annual ring pattern used in the panel-like regions J, with the direction of the straight grain pattern in the upper panel-like region J set to be diagonal from the upper right to the lower left, and the direction of the straight grain pattern in the lower panel-like region J set to be diagonal from the upper left to the lower right. Furthermore, each panel-like region J may be divided into plural pattern regions, different decorative patterns being formed in the individual pattern regions. The decorative patterns in the plural pattern regions may be arbitrarily combined. For example, a different decorative pattern may be inserted in one of the pattern regions in order to obtain a marquetry-like design.

The transfer decorated members according to the present invention include a transfer decorated member wherein at least two transfer layers are provided on the substrate 1. For example, decorative sheets may be laminated, directly printed, and/or coated, as desired, on that region of the substrate on which no transfer layer is provided.

In the transfer decorated member of the present invention, at least two transfer layers are provided on the substrate 1. Thus, needless to say, there may exist regions without any decoration, where neither transfer layers nor coating layers are provided.

## Claims

1. A method for manufacturing a transfer coated member, comprising the steps of
placing plural sheets (4) having separable transfer layers (2) for decoration with said transfer layers (2) located down-ward selectively on plural adjacent regions on the surface of a substrate (1), wherein the edge of the lately placed one of the sheets (4) is superposed on the formerly placed adjacent one of the sheets (4),
closely contacting, following said placing step, the transfer layers (2) with the surface of said substrate (1) by means of vacuum forming process, and
removing, following said closely contacting step, said sheets (4) form said transfer layers (2).

2. The method according to claim 1, wherein the surface of said substrate has a three-dimensional shape, further comprising the step of providing at least a part of the boundary of each of said plural transfer layers (2) for decoration in correspondence with the three-dimensional shape of the surface of the substrate (1).

3. The method according to claims 1 or 2, further comprising the step of selectively coating regions on the surface of the substrate (1) with an adhesive (3) prior to the placing step.

## Patentansprüche

1. Verfahren zur Herstellung eines durch Übertragung beschichteten Elements, das die Schritte umfasst:
mehrere Folien (4), die nach unten gewandte, ablösbare Übertragungsschichten (2) zur damit erfolgenden Dekoration aufweisen, selektiv auf mehrere aneinander angrenzende Bereiche auf der Oberfläche eines Substrats (1) zu legen, wobei die Kante der später aufgelegten Folie (4) über der jeweils angrenzenden, früher aufgelegten Folie (4) liegt,
im Anschluss an den Legeschritt die Übertragungsschichten (2) mittels eines Vakuumformvorgangs mit der Oberfläche des Substrats (1) in engen Kontakt zu bringen und
im Anschluss an den Schritt des in engen Kontakt Bringens die Folien (4) von den Übertragungsschichten (2) zu entfernen.

2. Verfahren nach Anspruch 1, bei dem die Oberfläche des Substrats eine dreidimensionale Form hat und das außerdem den Schritt umfasst, zumindest einen Teil des Rands jeder Übertragungsschicht (2) zur Dekoration in Übereinstimmung mit der dreidimensionalen Form der Oberfläche des Substrats (1) zu bringen.

3. Verfahren nach Anspruch 1 oder 2, das außerdem den Schritt umfasst, vor dem Legeschritt selektiv Bereiche auf der Oberfläche des Substrats (1) mit einem Klebemittel (3) zu beschichten.

## Revendications

1. Procédé pour fabriquer un élément revêtu par transfert, comprenant les opérations consistant à :
- placer plusieurs feuilles (4) ayant des couches de transfert séparables (2) afin de réaliser une décoration avec lesdites couches de transfert (2) située vers le bas et de manière sélective sur une pluralité de régions adjacentes sur la surface de substrats (1) de sorte que le bord d'une feuille (4) placée ultérieurement est superposé sur la feuille adjacente placée antérieurement (4),
- mettre en contact intime, à la suite de ladite opération de mise en place, les couches de transfert (2) avec la surface dudit substrat (1) au moyen d'un processus de mise en forme sous vide, et
- enlever, à la suite de ladite opération de mise en contact intime, lesdites feuilles (4) depuis lesdites couches de transfert (2).

2. Procédé selon la revendication 1, dans lequel la surface dudit substrat a une forme tridimensionnelle, et comprenant en outre l'opération consistant à prévoir au moins une partie de la frontière de chacune desdites couches de ladite pluralité de couches de transfert (2) pour la décoration en correspondance avec la forme tridimensionnelle de la surface du substrat (1).

3. Procédé selon l'une ou l'autre des revendications 1 et 2, comprenant en outre l'opération consistant à revêtir sélectivement des régions sur la surface du substrat (1) avec un adhésif (3) avant l'opération de mise en place.
